# EUROPEAN PATENT SPECIFICATION

(11) **EP 4 082 287 B1**
(45) Date of publication and mention of the grant of the patent: **06.08.2025**
(21) Application number: 20910191.4
(22) Date of filing: 16.12.2020
(51) Int. Cl.: H04W 74/08, H04W 74/0833, H04L 1/1607

(54) **METHOD AND USER EQUIPMENT FOR SMALL DATA TRANSMISSION**
VERFAHREN UND BENUTZERVORRICHTUNG ZUR ÜBERTRAGUNG KLEINER DATEN
PROCÉDÉ ET ÉQUIPEMENT D'UTILISATEUR POUR UNE PETITE TRANSMISSION DE DONNÉES

(30) Priority: 31.12.2019 US 201962955741 P
(43) Date of publication of application: 02.11.2022
(73) Proprietor: Sharp Kabushiki Kaisha, Sakai-shi, Osaka 590-8522 (JP)
(72) Inventor: LIN, Chiahung, Neihu Dist., Taipei 114 (TW); CHEN, Hungchen, Neihu Dist., Taipei 114 (TW); SHIH, Meiju, Neihu Dist., Taipei 114 (TW)
(74) Representative: Müller-Boré & Partner Patentanwälte PartG mbB
(86) International application number: PCT/CN2020/136734
(87) International publication number: WO 2021/135941

(56) References cited:
- EP-A2- 3 571 878
- WO-A2-2017/120091
- US-A1- 2016 366 704
- HUAWEI ET AL: "Further views on Rel-17 small data work area", vol. TSG RAN, no. Newport Beach, US; 20190916 - 20190920, 9 September 2019 (2019-09-09), XP051782382, Retrieved from the Internet <URL:http://www.3gpp.org/ftp/tsg_ran/TSG_RAN/TSGR_85/Docs/RP-191833.zip> [retrieved on 20190909]
- HUAWEI, HISILICON: "Key points on NR small data", 3GPP DRAFT; RP-192789, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Stiges, Spain; 20191209 - 20191212, 2 December 2019 (2019-12-02), Mobile Competence Centre ; 650, route des Lucioles ; F-06921 Sophia-Antipolis Cedex ; France, XP051834381

## Description

### FIELD

The present disclosure generally relates to wireless communications and, more particularly, to a method and a user equipment for small data transmission.

### BACKGROUND

With the tremendous growth in the number of connected devices and the rapid increase in user/Network (NW) traffic volume, various efforts have been made to improve different aspects of wireless communication for next-generation wireless communication systems, such as the fifth-generation (5G) New Radio (NR), by improving data rate, latency, reliability, and mobility.

The 5G NR system is designed to provide flexibility and configurability to optimize the NW services and types, accommodating various use cases such as Enhanced Mobile Broadband (eMBB), Massive Machine-Type Communication (mMTC), and Ultra-Reliable and Low-Latency Communication (URLLC).

However, as the demand for radio access continues to increase, there is a need in the art to improve small data transmission.

EP 3 571 878 A2 discusses a method for wireless communication by a base station, comprising: receiving a paging indication and at least an indication of a limited amount of data targeted for a user equipment (UE) that is not in a connected state with the base station transmitting a paging message to the UE with at least one of the data or an indication of the data; and monitoring for a physical random access channel (PRACH) transmission from the UE as an acknowledgment of receipt of the data.

Huawei et al, "Further views on Rel-17 small data work area", 3GPP TSG RAN Meeting #85, Newport Beach, US, September 16-20, 2019, 3GPP Draft RP-191833, discusses small data transmission, requirements, user cases and scenarios.

### SUMMARY

The above and other objects are achieved by a method performed by a User Equipment (UE) for small data transmission and a UE as defined in the independent claims, respectively. Preferred embodiments are set forth in the dependent claims.

### BRIEF DESCRIPTION OF THE DRAWINGS

Aspects of the present disclosure are best understood from the following when read with the accompanying figures. Various features are not drawn to scale. Dimensions of various features may be arbitrarily increased or reduced for clarity of discussion.
Figure 1 illustrates a 2-step RACH procedure to be formed by a 4-step RACH procedure according to an example implementation of the present disclosure.
Figure 2 illustrates a fallback RAR format according to an example implementation of the present disclosure.
Figure 3 illustrates a success RAR format according to an example implementation of the present disclosure.
Figure 4 illustrates a success RAR MAC subheader format according to an example implementation of the present disclosure.
Figure 5 illustrates a new RAR format according to an example implementation of the present disclosure.
Figure 6 illustrates a modified successRAR format according to an example implementation of the present disclosure.
Figure 7 illustrates a small data transmission procedure performed by the UE according to an example implementation of the present disclosure.
Figure 8 illustrates a block diagram of a node for wireless communication according to an example implementation the present disclosure.

### DESCRIPTION

The following contains specific information pertaining to exemplary implementations in the present disclosure. The drawings and their accompanying detailed disclosure are directed to merely exemplary implementations. However, the present disclosure is not limited to merely these exemplary implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

The following contains specific information pertaining to example implementations in the present disclosure. The drawings and their accompanying detailed disclosure are directed to merely example implementations. However, the present disclosure is not limited to merely these example implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For consistency and ease of understanding, like features are identified (although, in some examples, not illustrated) by numerals in the example figures. However, the features in different implementations may differ in other respects, and thus shall not be narrowly confined to what is illustrated in the figures.

References to "one implementation," "an implementation," "example implementation," "various implementations," "some implementations," "implementations of the present disclosure," etc., may indicate that the implementation(s) of the present disclosure may include a particular feature, structure, or characteristic, but not every possible implementation of the present disclosure necessarily includes the particular feature, structure, or characteristic. Further, repeated use of the phrase "in one implementation," "in an example implementation," or "an implementation," do not necessarily refer to the same implementation, although they may. Moreover, any use of phrases like "implementations" in connection with "the present disclosure" are never meant to characterize that all implementations of the present disclosure must include the particular feature, structure, or characteristic, and should instead be understood to mean "at least some implementations of the present disclosure" includes the stated particular feature, structure, or characteristic. The term "coupled" is defined as connected, whether directly or indirectly through intervening components, and is not necessarily limited to physical connections. The term "comprising," when utilized, means "including, but not necessarily limited to"; it specifically indicates open-ended inclusion or membership in the so-disclosed combination, group, series, and the equivalent.

The term "and/or" herein is only an association relationship for describing associated objects, and represents that three relationships may exist. For example, A and/or B may represent that: A exists alone, A and B exist at the same time, and B exists alone. "A and/or B and/or C" may represent that at least one of A, B and C exists. In addition, the character "/" used herein generally represents that the former and latter associated objects are in an "or" relationship.

Additionally, for the purpose of non-limiting explanation, specific details, such as functional entities, techniques, protocols, standards, and the like, are set forth for providing an understanding of the disclosed technology. In other examples, a detailed disclosure of well-known methods, technologies, systems, architectures, and the like are omitted in order not to obscure the present disclosure with unnecessary details.

Persons skilled in the art will immediately recognize that any NW function(s) or algorithm(s) in the present disclosure may be implemented by hardware, software, or a combination of software and hardware. Disclosed functions may correspond to modules that may be software, hardware, firmware, or any combination thereof. The software implementation may comprise computer-executable instructions stored on computer-readable media such as memory or other types of storage devices. For example, one or more microprocessors or general-purpose computers with communication processing capability may be programmed with corresponding executable instructions and carry out the disclosed NW function(s) or algorithm(s). The microprocessors or general-purpose computers may be formed of Application-Specific Integrated Circuits (ASICs), programmable logic arrays, and/or using one or more Digital Signal Processor (DSPs). Although some of the example implementations in the present disclosure are directed to software installed and executing on computer hardware, alternative example implementations implemented as firmware, as hardware, or as a combination of hardware and software are well within the scope of the present disclosure.

The computer-readable medium includes but is not limited to Random Access Memory (RAM), Read-Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication NW architecture (e.g., a Long Term Evolution (LTE) system, an LTE-Advanced (LTE-A) system, or an LTE-Advanced Pro system) typically includes at least one Base Station (BS), at least one user equipment (UE), and one or more optional NW elements that provide connection towards an NW. The UE communicates with the NW (e.g., a Core NW (CN), an Evolved Packet Core (EPC) NW, an Evolved Universal Terrestrial Radio Access NW (E-UTRAN), a Next-Generation Core (NGC), or an Internet), through a Radio Access NW (RAN) established by the BS.

It should be noted that, in the present disclosure, a UE may include, but is not limited to, a mobile station, a mobile terminal or device, or a user communication radio terminal. For example, a UE may be a portable radio equipment, which includes, but is not limited to, a mobile phone, a tablet, a wearable device, a sensor, or a Personal Digital Assistant (PDA) with wireless communication capability. The UE is configured to receive and transmit signals over an air interface to one or more cells in a RAN.

A BS may include, but not limited to, a Node B (NB) as in the Universal Mobile Telecommunication System (UMTS), an evolved Node B (eNB) as in the LTE-A, a Radio NW Controller (RNC) as in the UMTS, a Base Station Controller (BSC) as in the Global System for Mobile communications (GSM)/GSM EDGE Radio Access NW (GERAN), a Next Generation eNB (ng-eNB) as in an E-UTRA BS in connection with the 5GC, a next-generation Node B (gNB) as in the 5G Access NW (5G-AN), and any other apparatus capable of controlling radio communication and managing radio resources within a cell. The BS may connect to serve the one or more UEs through a radio interface to the NW.

A BS may be configured to provide communication services according to at least one of the following Radio Access Technologies (RATs): Worldwide Interoperability for Microwave Access (WiMAX), GSM (often referred to as 2G), GERAN, General Packet Radio Service (GPRS), UMTS (often referred to as 3G) based on basic Wideband-Code Division Multiple Access (W-CDMA), High-Speed Packet Access (HSPA), LTE, LTE-A, enhanced LTE (eLTE), NR (often referred to as 5G), and LTE-A Pro. However, the scope of the present disclosure should not be limited to the protocols previously disclosed.

The BS may be operable to provide radio coverage to a specific geographical area using a plurality of cells included in the RAN. The BS may support the operations of the cells. Each cell is operable to provide services to at least one UE within its radio coverage. More specifically, each cell (often referred to as a serving cell) may provide services to serve one or more UEs within its radio coverage, (e.g., each cell schedules the Downlink (DL) and optionally UL resources to at least one UE within its radio coverage for DL and optionally Uplink (UL) packet transmissions). The BS may communicate with one or more UEs in the radio communication system through the plurality of cells. A cell may allocate sidelink (SL) resources for supporting proximity service (ProSe). Each cell may have overlapped coverage areas with other cells. In Multi-RAT Dual Connectivity (MR-DC) cases, the primary cell of a Master Cell Group (MCG) or a Secondary Cell Group (SCG) may be called as a Special Cell (SpCell). A Primary Cell (PCell) may refer to the SpCell of an MCG. A PSCell may refer to the SpCell of an SCG. MCG refers to a group of serving cells associated with the Master Node (MN), including the SpCell and optionally one or more secondary cells (SCells). SCG refers to a group of serving cells associated with the Secondary Node (SN), including the SpCell and optionally one or more SCells.

As previously disclosed, the frame structure for NR is to support flexible configurations for accommodating various next-generation (e.g., 5G) communication requirements, such as eMBB, mMTC, and URLLC, while fulfilling high reliability, high data rate, and low latency requirements. The orthogonal frequency-division multiplexing (OFDM) technology, as agreed in the 3^{rd} Generation Partnership Project (3GPP), may serve as a baseline for an NR waveform. The scalable OFDM numerology, such as the adaptive sub-carrier spacing, the channel bandwidth, and the cyclic prefix (CP), may also be used. Additionally, two coding schemes are considered for NR: (1) low-density parity-check (LDPC) code and (2) polar code. The coding scheme adaption may be configured based on the channel conditions and/or service applications.

Moreover, it is also considered that in a transmission time interval of a single NR frame, at least DL transmission data, a guard period, and UL transmission data should be included, where the respective portions of the DL transmission data, the guard period, and the UL transmission data should also be configurable, for example, based on the NW dynamics of NR. In addition, SL resources may also be provided in an NR frame to support ProSe services.

Hereinafter, some descriptions are disclosed for specific terms presented in the following paragraphs:
▪ **Configured grant Type 1:** It is semi-statically configured to operate upon the reception of Radio Resource Control (RRC) parameter *configuredGrantConfig* including *rrc-ConfiguredUplinkGrant* without the detection of a UL grant in a Downlink Control Information (DCI).
▪ **Cell:** Radio network object that can be uniquely identified by a UE from a (cell) identification that is broadcast over a geographical area from one UTRAN Access Point. A Cell is either Frequency Division Duplexing (FDD) or Time Division Duplexing (TDD) mode.
▪ **RACH procedure:** Random Access Channel (RACH) procedure is a sequence of process between UE and gNB (Network) in order for the UE to acquire UL Synchronization and obtain a specified Identifier (ID) for the radio access communication.
▪ **PUSCH:** Physical Uplink Shared Channel (PUSCH) is the physical time/frequency resources that gNB schedules to the UE for data transmission.
▪ **RNTI:** Radio Network Temporary Identifier (RNTI) is a kind of Identification number. Normally we use identification numbers to differentiate one thing from all other similar things.
▪ **MAC CE:** Medium Access Control (MAC) control element (CE) is a MAC structure that carries special control information.
▪ **RSSI:** Received signal strength indicator (RSSI) is a measurement of the power present in a received radio signal.
▪ **RSRP:** Reference Signal Receive Power (RSRP) is the average power of Resource Elements (RE) that carry cell specific Reference Signals (RS) over the entire bandwidth.

Specifically, small data transmission in an inactive state was approved to be a new Release 17 (Rel-17) work item (WI) for NR in RAN work group (WG) #86. It means that NR will support a UE with infrequent (periodic and/or aperiodic) data transmission in the RRC_INACTIVE state. More specifically, the UE doesn't move/switch to the RRC _CONNECTED state for UL data transmission. Therefore, the UE and/or gNB can avoid unnecessary power consumption and signaling overhead. For now, there are three features having been specified as part of Release 15 (Rel-15) and Release 16 (Rel-16), e.g., 2-step, 4-step RACH procedure and configured grant type-1. This WI builds on these features to enable small data transmission in the RRC_INACTIVE state for NR.

In some implementations, the gNB may not schedule any resources for devices in the RRC_IDLE or the RRC_INACTIVE state to avoid wasting resources. Therefore, in one implementation, when a device (e.g., UE) would like to connect to the gNB and initiate a data transfer, a RACH procedure may be used to connect to a cell (or a BS). Once the device has detected a cell (and camped on this cell), it may initiate the RACH procedure to access the cell. Conventionally, a four-step RACH procedure (or called 4-step RACH procedure) is applied for LTE and NR, which is presented in the following 4 steps.
▪ **Step 1 (Message 1/Msg-1):** The device (e.g., UE) transmits a Physical Random Access Channel (PRACH) preamble associated with a Random Access-RNTI (RA-RNTI) to the gNB.
▪ **Step 2 (Message 2/Msg-2):** The gNB (or eNB) transmits a Random Access Response (RAR) to indicate the reception of the preamble. Also, the RAR carries resource allocation information for the next step, e.g., Message 3 transmission by the UE.
▪ **Step 3 (Message 3/Msg-3):** Once the device decodes the content of RAR successfully, it sends Message 3 to the gNB (or eNB) to request an RRC connection.
▪ **Step 4 (Message 4/Msg-4):** The gNB (or eNB) transmits a Physical Downlink Shared Channel (PDSCH) carrying Message 4 to transit the device to the RRC_CONNECTED state. Contention Resolution ID (CRID) MAC CE may be included in Message 4 for contention resolution.

Once the RACH procedure is completed, the device is in the RRC_CONNECTED state and a gNB-device communication could start by using scheduling-based transmission.

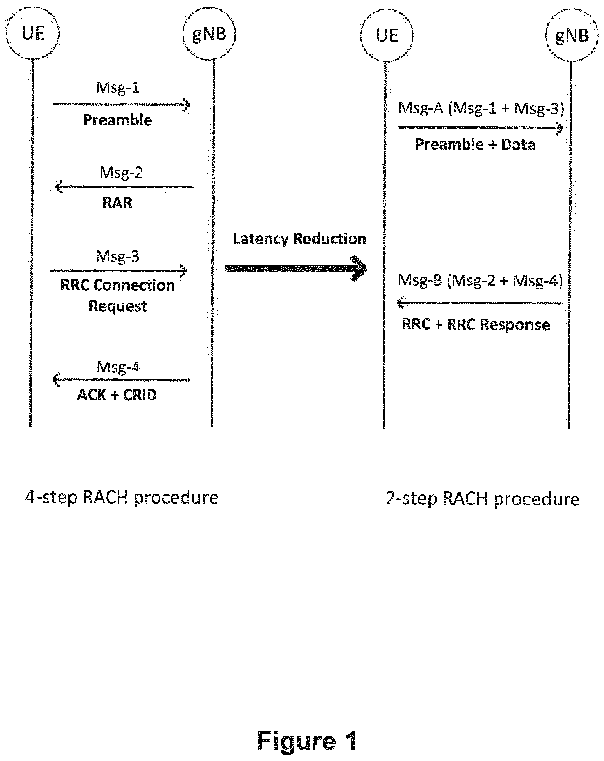

In Rel-16, a two-step RACH procedure (or called 2-step RACH procedure) is discussed in 3GPP to reduce the latency and the overhead of the conventional 4-step RACH procedure. The 2-step RACH procedure may also be beneficial for small data transmission. Please refer to Figure 1, which illustrates a 2-step RACH procedure to be formed by a 4-step RACH procedure according to an example implementation of the present disclosure. In some embodiments, as shown in Figure 1, some steps of the 4-step RACH procedure are merged to form the 2-step RACH procedure, so that it may efficiently save, e.g., the number of transmissions. Specifically, Msg-1 may be combined with Msg-3 to form the Msg-A in the 2-step RACH procedure, and Msg-2 may be combined with Msg-4 to form the Msg-B in the 2-step RACH procedure. Note that RA response(s) included in a Msg-B may be different from RA response(s) included in a Msg-2.

Since there are more and more small and infrequent types of data traffic, such as traffic from instant message services, traffic from wearables, traffic from smart meters, and so on, signaling overhead has become an important issue. It influences not only network performance/efficiency but also UE battery life, so it is required to support small data transmission for a UE being operated in the RRC_INACTIVE state before switching to the RRC_CONNECTED state.

In some embodiments, it is disclosed that small data transmission may be performed via 2-step RACH procedure, 4-step RACH procedure, or pre-configured PUSCH resources (e.g., by providing configured grant type1 configuration) for a UE in the RRC_INACTIVE state, rather than in the RRC_CONNECTED state, to avoid unnecessary signal overhead and power consumption. Accordingly, several fundamental problems need to be solved in order to support the small data transmission in the RRC_INACTIVE state.

For the first problem, if the small data transmission is infrequently performed via 2-step RACH procedure, 4-step RACH procedure, and/or configured grant type 1, it may be important how the gNB can identify that the received data are the infrequent small data or other scheduled data (e.g., small data or an RRC message being carried in Msg-A and Msg-3).

In some embodiments, for the 2-step RACH procedure and the 4-step RACH procedure of NR, the UE may move/switch to the RRC_CONNECTED state after completing the RACH procedure. However, the main motivation of small data transmission is to have the UE transmit a small size payload in the RRC_INACTIVE state without switching to the RRC_CONNECTED state for reducing power consumption and signaling overhead. Under such motivation, it may be necessary for the NW to identify whether the current received data is for small data transmission or for a scheduled RACH procedure.

For the second problem, it may be important to determine a mechanism for informing the UE whether small data transmission has been successfully decoded at the gNB side. In some implementations, as performed by the common RACH procedure, the UE may be operated in the RRC _CONNECTED state when it receives successRAR in the 2-step RACH procedure or Msg-4 (contention resolution) in the 4-step RACH procedure. Similarly, as being operated for the small data transmission, an indicator may also be needed to inform the UE that the transmission is successful. Thus, the mechanism may be introduced in the following paragraphs how to inform the UE that the small data transmission has been successfully decoded at the gNB side.

Therefore, there are two fundamental issues, e.g., (1) how to identify the RRC message (e.g., RACH transmission/data transmission) and the small data transmission, and (2) how to form the mechanism for informing the UE that the small data transmission has been completed, which is disclosed in the following paragraphs.

### Small Data Transmission Identification

In some implementations, the NW may configure dedicated physical resources (e.g., time, frequency, code, preambles, RACH occasion (RO), or PUSCH occasion (PO), which is not limited to hereinafter) for small data transmission to UEs (e.g., via dedicated signaling or via broadcasting system information). In one implementation, the NW may schedule a dedicated RO for small data transmission to the UEs and inform the UEs that there is a dedicated RO for small data transmission via broadcasting system information (SI). Then the UE performing small data transmission may pick up the preamble in that dedicated RO used for small data transmission to send to the gNB, so as to start small data transmission.

In some implementations, the NW may configure dedicated preambles for small data transmission (e.g., via dedicated signaling or via broadcasting system information). In some implementations, dedicated RA resource(s) may be provided in the RRC Release message (e.g., an RRC Release message with/without suspend configuration) to the UE for transmitting (small) data in the RRC_INACTIVE state. The dedicated RA resource(s) may be dedicated preambles, dedicated ROs, and/or a dedicated PUSCH resource (e.g., the payload part of a Msg-A). For dedicated preambles, these preambles may be obtained from all used preambles in NR, and these preambles may only be used for small data transmission. In some implementations, preambles may be shared for different purposes, such as small data transmission, 4-step RACH procedure, 2-step RACH procedure, and so on. For example, the gNB may schedule some preambles, e.g., preamble#0 to preamble#20 in the 64 preambles, to be used for both 2-step RACH procedure (e.g., for RRC connection setup or resume) and for small data transmission via 2-step RACH procedure at the same RO. In some implementations, if a shared preamble is selected, the associated PUSCH may carry some information to assist the gNB for identifying whether the purpose is for small data transmission via 2-step RACH procedure or RRC connection setup/resume via 2-step RACH procedure. If a shared preamble is picked up to use for RRC connection setup/resume via 2-step RACH procedure, 2-step RACH procedure defined in Rel-16 may be triggered (e.g., as introduced in 3GPP Technical Specification (TS) 38.321).

In some implementations, a dedicated group of preambles may be configured for the purpose of small data transmission. A UE who intends to transmit small data in the RRC_INACTIVE state may use the dedicated group of preambles to indicate that the purpose of an initiated RACH procedure is for small data transmission.

In some implementations, the NW may provide pre-configured PUSCH resources for the UE to transmit small data in the RRC_INACTIVE state. In some implementations, the configured grant scheduled by the NW may only be used for small data transmission. In some implementations, the configured grant assigned by the NW is used for not only small data transmission but also for other data transmission (e.g., Ultra Reliable Low Latency Communication (URLLC) data transmission).

In some implementations, a unique UE identity (e.g., Inactive-RNTI (I-RNTI) or 5G S-Temporary Mobile Subscription Identifier (5G-S-TMSI)) or related UE identity information may be used to identify whether the received data at the gNB side is associated with small data transmission or not. For example, if the gNB identifies that an I-RNTI is included in the content of received data, the current received data may be considered as small data. In some implementations, for (small) data transmission in the RRC_INACTIVE state via the 2-step RACH procedure, a UE may include an I-RNTI MAC CE in the payload of a Msg-A. In some implementations, for (small) data transmission in the RRC_INACTIVE state via the 4-step RACH procedure, a UE may include an I-RNTI MAC CE in a Msg-3. In some implementations, for (small) data transmission in the RRC_INACTIVE state via pre-configured PUSCH resources, a UE may include an I-RNTI MAC CE in the selected PUSCH resources for data transmission. In some implementations, an I-RNTI MAC CE may be identified by a MAC subheader with a specific Logical Channel Identifier (LCID). In some implementations, an I-RNTI MAC CE may have an ID field to indicate a UE's fullI-RNTI. In some implementations, an I-RNTI MAC CE may have an ID field to indicate a UE's shortI-RNTI. In some implementations, an I-RNTI MAC CE for fullI-RNTI may be identified by a MAC subheader with a specific LCID (e.g., 51) and another I-RNTI MAC CE for shortI-RNTI may be identified by a MAC subheader with another LCID (e.g., 50). In some implementations, whether to include an I-RNTI MAC CE for fullI-RNTI or an I-RNTI MAC CE for shortI-RNTI may be determined based on the NW's commands (e.g., via dedicated signaling or SI).

In some implementations, the gNB may send the Acknowledgement (ACK) indicator to the UE to inform the UE that the data transmitted in the RRC_INACTIVE state is decoded/received successfully. In some implementations, when the UE receives the ACK indicator associated with the small data transmitted in the RRC_INACTIVE state, the UE may consider that the (small) data transmission is successful and no re-transmission of the (small) data may be required. In some implementations, the gNB may send the ACK indicator and the new configurations (e.g., RRC Release with suspendConfig) to the UE to inform the UE that the data transmitted in the RRC_INACTIVE state is decoded/received successfully. In some implementations, when the UE receives the ACK indicator associated with the small data transmitted in the RRC_INACTIVE state and the new configurations, the UE may consider that the (small) data transmission is successful and apply the new configuration for the RRC_INACTIVE state.

In some implementations, the RRCResumeRequest message may be transmitted in Msg-A (of a 2-step RACH procedure) or in Msg-3 (of a 4-step RACH procedure) with a new Resume Cause as small data transmission to inform the NW. The NW may send the RRC Release with suspendConfig to the UE if the Resume Cause is "small data transmission".

In some implementations, if the UE has one or more small data for transmitting to the gNB or the PUSCH resource cannot accommodate the small data, the UE may request an additional UL grant for another small data transmission or the remaining data transmission. For example, the UE may inform the NW that it has other incoming small data packets in the 2-step RACH Msg-A PUSCH via MAC CE or RRC message.

In some implementations, in response to the request of an additional UL grant by the UE, the gNB may send an existing RAR with modification (e.g., using the reserved bits in the existing MAC RAR (or RAR payload) to inform the UE that the scheduled UL grant given to the UE via that MAC RAR (or RAR payload) is used for the new data transmission, the data retransmission, or the remaining data transmission of a small data transmission). In some implementations, the gNB may use a new MAC RAR (or RAR payload) for the UE to send another small data packet or the remaining data. Noticeably, in some implementations, a MAC Packet or Protocol Data Unit (PDU) (of Msg-B) may include one or more MAC subPDUs and optional padding. In one implementation, each MAC subPDU includes one of the following:
▪ a MAC subheader with Backoff Indicator only;
▪ a MAC subheader and fallbackRAR;
▪ a MAC subheader and successRAR;
▪ a MAC subheader and MAC Service Data Unit (SDU) for Common Control Channel (CCCH) or Dedicated Control Channel (DCCH).

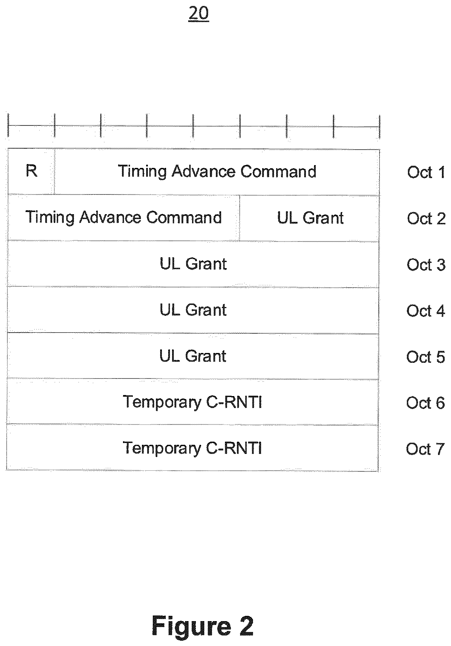

In some implementations, the gNB may use fallbackRAR to schedule the additional UL grant for a UE, so as to transmit the next small data or the remining data. Please refer to Figure 2, which illustrates a fallback RAR format 20 according to an example implementation of the present disclosure. In one implementation, as shown in Figure 2, the fallback RAR format 20 may include the following fields:
▪ **R:** This field represents the reserved bit, which is set to "0";
▪ **Timing Advance Command:** This field indicates the index value Timing Advance (TA) used to control the amount of timing adjustment that the MAC entity has to apply, e.g., in 3GPP Technical Specification (TS) 38.213 v15.7.0. The size of the Timing Advance Command field is 12 bits;
▪ **UL Grant:** This field indicates the resources to be used on the UL, e.g., in 3GPP TS 38.213 v15.7.0. The size of the UL Grant field is 27 bits;
▪ **Temporary C-RNTI**
▪ **(Cell-RNTI):** This field indicates the temporary identity that is used by the MAC entity during random access (RA). The size of the Temporary C-RNTI field is 16 bits.

In some implementations, the reserved bit may be used to indicate the type of data transmitted in the UL grant (indicated in UL grant field). In some implementations, the type of data transmission may be the new data transmission (e.g., for next small data or other part of remaining data), previous small data retransmission, or common 2-step/4-step RACH data transmission (e.g., Msg-A payload retransmission), which is not limited hereinafter.

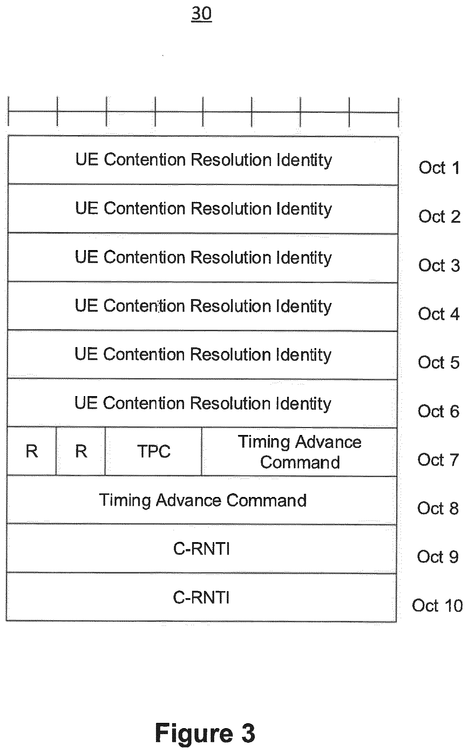

In some implementations, the gNB may use successRAR to schedule the additional UL grant for a UE to transmit the next small data transmission or the remaining data of a small data transmission. Please refer to Figure 3, which illustrates a success RAR (successRAR) format 30 according to an example implementation of the present disclosure. In one implementation, as shown in Figure 3, the success RAR format 30 may include the following fields:
▪ **UE Contention Resolution Identity:** This field contains the UL CCCH SDU. If the UL CCCH SDU is longer than 48 bits, this field contains the first 48 bits of the UL CCCH SDU.
▪ **R:** This field represents the reserved bit, which is set to "0";
▪ **TPC:** This field represents the TPC command for the PUCCH resource containing Hybrid Automatic Repeat reQuest (HARQ) feedback for Msg-B, e.g., as being specified in 3GPP TS 38.213 v15.7.0. The size of the TPC field is 2 bits;
▪ **Timing Advance Command:** This field indicates the index value TA used to control the amount of timing adjustment that the MAC entity has to apply, e.g., in 3GPP TS 38.213 v15.7.0. The size of the Timing Advance Command field is 12 bits;
▪ **C-RNTI:** This field indicates the identity that is used by the MAC entity upon completion of RA. The size of the C-RNTI field is 16 bits.

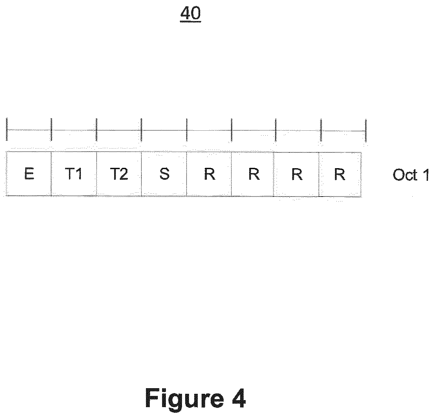

In some implementations, the UL grant field may be included in a success RAR to schedule additional UL grant for new data transmission (e.g., for the next small data or the remaining data of a small data transmission). In some implementations, whether the UL grant field may be present in a success RAR may depend on the notification from the UE. For example, a UE who requests an additional UL grant in the first PUSCH resource (e.g., in the PUSCH of Msg-A or Msg-3) may determine that the UL grant field exists if the received UE Contention Resolution Identity field matches the CCCH SDU. In some implementations, the reserved bit(s) in the subheader of a success RAR may be utilized to indicate whether the associated success RAR includes a UL grant field. Please refer to Figure 4, which illustrates a success RAR MAC subheader format 40 according to an example implementation of the present disclosure. In one implementation, as shown in Figure 4, the success RAR MAC subheader format 40 may include the following fields:
▪ **E (Extension):** This field is a flag, which indicates that the MAC subPDU is the last one (other than MAC subPDU for MAC SDU) or is not in the MAC PDU if the MAC subPDU includes this MAC subheader. The E field being "1" indicates that at least another MAC subPDU (other than MAC subPDU for MAC SDU) follows. The E field being "0" indicates that the MAC subPDU including this MAC subheader is the last MAC subPDU (other than MAC subPDU for MAC SDU) in the MAC PDU;
▪ **T1:** This field is a flag indicating whether the MAC subheader contains a RA Preamble ID or T2. The T1 field being "1" indicates the presence of a RA Preamble ID (RAPID) field in the subheader. The T1 field being "0" indicates the presence of a T2 field in the subheader;
▪ **T2:** This field is a flag indicating whether the MAC subheader contains a Backoff Indicator (BI) or a MAC SDU indicator (S). The T2 field being "0" indicates the presence of a Backoff Indicator field in the subheader. The T2 field being "1" indicates the presence of the S field in the subheader;
▪ **S:** This field indicates whether "MAC subPDU(s) for MAC SDU" follows the MAC subPDU including this MAC subheader. The S field being "1" indicates the presence of "MAC subPDU(s) for MAC SDU". The S field being "0" indicates the absence of "MAC subPDU(s) for MAC SDU".
▪ **R:** In some implementations, one of the reserved bits may be used to indicate that whether the UL grant field is present or not.

In some implementations, the gNB may provide the UL grant to the UE via a new DCI format (or an existing DCI format with different field descriptions) which may be scrambled with I-RNTI, 5G-S-TMSI, or the new RNTI related to small data transmission, but is not limited thereto. In some implementations, after receiving a success RAR associated with the sent preamble, a UE may start monitoring a Control Resource Set#0 (CORESET#0) (or other configured CORESET) addressed to C-RNTI (or I-RNTI). If no DCI can be received in a timer period, the UE may determine that the 2-step RACH procedure is finished and remains in the RRC_INACTIVE state. The UE may stop monitoring the CORESET#0 (or other configured CORESET) addressed to C-RNTI (or I-RNTI).

In some implementations, if a UE has no more small data to transmit, the UE may send an indication or information (e.g., in an RRC message, a MAC CE, or a DCI) which is used to inform the gNB that the UE doesn't need further resources to transmit (small) data. In some implementations, the UE may set a new resumeCause in an RRC Resume Request message. For example, the UE may set the resumeCause as small data transmission, carried in the RRCResumeRequest or RRCResumeRequest1 to inform the gNB (or cell) that the transmission purpose is for small data transmission. In some implementations, the gNB may send the RRC Release with suspendConfig to the UE. In some implementations, the gNB may send the new configuration to the UE for the following (small) data transmission.

In some implementations, several new RRC parameters may be used for small data transmission. For example, the new RRC parameter may represent for the preamble group used for small data transmission, for the number of RO and PO used for small data transmission, or for the number of preambles used for small data transmission.

In some implementations, the transmitted small data may carry the I-RNTI of the UE for the purpose of UE/device identification, where the I-RNTI may include, e.g., *fullI-RNTI* and/or *shortI-RNTI.* In some implementations, *fullI-RNTI* may be used for small data transmission to identify the UE/device. In some implementations, *shortI-RNTI* may be used for small data transmission to identify the UE/device. In some implementations, if field *useFullResumeID* is signaled in SIB 1, *fullI-RNTI* may be used for small data transmission to identify the UE/device; otherwise, *shortI-RNTI* may be used for small data transmission to identify the UE/device.

In some implementations, the NW may broadcast a threshold for the UE to determine whether it can transmit data in the RRC_INACTIVE state. In some implementations, the threshold may be Reference Signal Received Power (RSRP), Reference Signal Received Quality (RSRQ), Received Signal Strength Indication (RSSI), layer 2 buffer size, transmitted payload size, or type of radio bearer (e.g., signaling radio bearer, data radio bearer), but is not limited thereto. In some implementations, the UE may determine whether to perform small data transmission when a measured RSSI value is larger than a broadcast RSSI threshold value of a 2-step RACH procedure.

At the UE side, the upper layer (e.g., MAC entity) of the UE may need to decide that the current transmission is for small data transmission via 2-step/4-step RACH procedure or for connection setup/resume via 2-step/4-step RACH procedure. In some implementations, the upper layer of the UE may decide whether the transmitted data is small data or not according to the transmitted bits in the PUSCH. If the transmitted data is not small data, the UE may need to ask for connection setup/resume to switch to RRC_CONNECTED state. For example, in some implementations, if the transmitted bits are smaller than K bits (e.g., the number K may be signaled to the UE via RRC message(s) (or dedicated signaling) or pre-configured/pre-defined, but is not limited thereto), it may be determined as small data transmission. If the number of transmitted bits is larger than K bits, the upper layer of the UE may trigger the 2-step RACH procedure or 4-step RACH procedure to have the UE switch to the RRC _CONNECTED state for the data transmission. For example, if K is pre-defined to be 1000 and the UE needs to transmit 520 bits, the upper layer of the UE may determine the current transmission as small data transmission. The upper layer of the UE may pick up the dedicated preambles used for small data transmission to inform the lower layer (e.g., physical layer) to send to the gNB if there are dedicated preambles used for small data transmission. Next, the UE may start RACH-based small data transmission. If there are no dedicated preambles, the upper layer of UE may randomly select one preamble to require the lower layer to send to the gNB, and accordingly, the UE may put some information in Msg-A/Msg-3 PUSCH to inform the gNB that the purpose of current transmission is for small data transmission. In some implementations, the NW may not allow the multiplexing between data radio bearer (DRB) and signal radio bearer (SRB) in the RRC_INACTIVE state. In some implementations, the NW may allow the multiplexing between data radio bearer (DRB) and signal radio bearer (SRB) in the RRC_INACTIVE state.

In some implementations, the upper layer may determine whether to trigger small data transmission based on the type of radio bearer (e.g., SRB or DRB) in the RRC_INACTIVE state if the multiplexing of signal radio bearer (SRB) and DRB is not allowed. For example, if the type of radio bearer is data radio bearer (DRB), the upper layer of UE may trigger small data transmission. In some implementations, the multiplexing between DRB and SRB is allowed in the RRC_INACTIVE state, and the upper layer of UE may trigger the small data transmission based on the number of transmitted bits. For example, if the number of transmitted bits is larger than Q bits (the number of Q may be signaled to the UE via RRC message(s) (or dedicated signaling) or be pre-configured/pre-defined, but is not limited thereto), the upper layer of UE may trigger small data transmission.

In some implementations, the NW may inform UEs whether the NW enables the capability of small data transmission. In some implementations, the NW may transmit the RRC message, dedicated signaling and/or broadcast SI to inform the UE whether the UE is allowed to transmit data in the RRC_INACTIVE state.

### ACK indicator for small data transmission

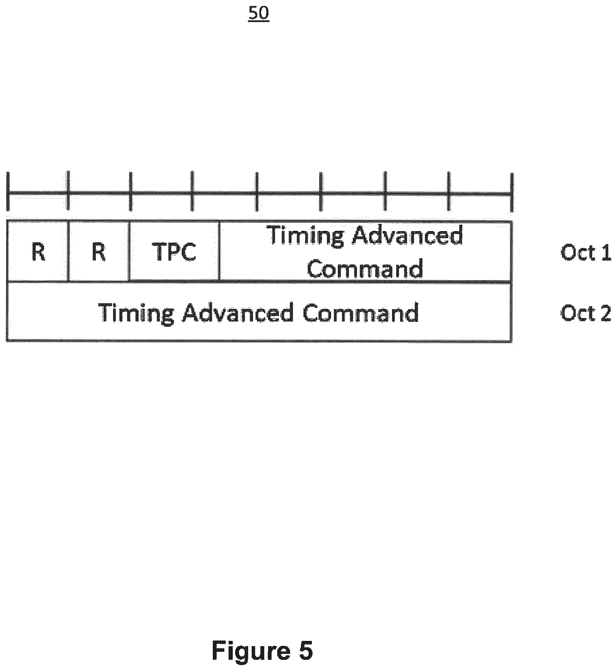

In the current invention, the RAR carries the ACK indicator to inform the UE that the gNB has successfully received the data. In some implementations, a new RAR may be used to indicate to the UE that the small data transmission is completed. Please refer to Figure 5, which illustrates a new RAR format 50 according to an example implementation of the present disclosure. In one implementation, the new RAR format for small data transmission ACK indicator may include the following fields:
▪ **R:** This field represents the reserved bit, which is set to "0";
▪ **TPC**: This field represents the TPC command for the PUCCH resource containing HARQ feedback for Msg-B, as specified, for example, in 3GPP TS 38.213 v15.7.0. The size of the TPC field is 2 bits;
▪ **Timing Advance Command:** This field indicates the index value TA used to control the amount of timing adjustment that the MAC entity has to apply in, e.g., 3GPP TS 38.213 v15.7.0. The size of the Timing Advance Command field is 12 bits;

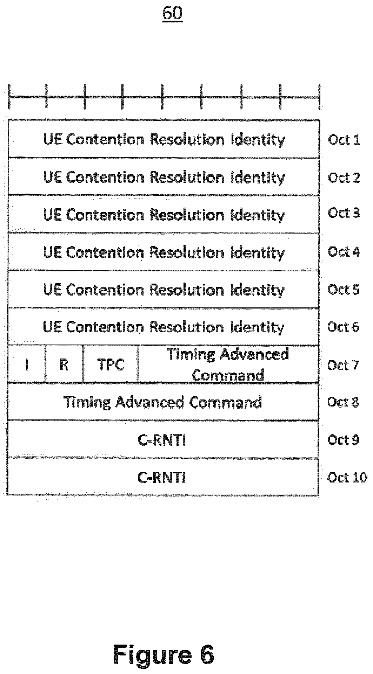

In some implementations, the existing RARs may be reused with some modification to indicate to the UE that the small data transmission is completed. For example, the successRAR may be reused to indicate to the UE that the small data transmission is completed by using one reserved bit to be the ACK indicator. Please refer to Figure 6, which illustrates a modified successRAR format 60 according to an example implementation of the present disclosure. In one implementation, the modified successRAR format 60 for small data transmission with ACK indicator may include the following fields:
▪ **UE Contention Resolution Identity:** This field contains the UL CCCH SDU. If the UL CCCH SDU is longer than 48 bits, this field may contain the first 48 bits of the UL CCCH SDU.
▪ **I**: This field represents an indicator to inform the UE what's the next step; "1" may represent stopping the transmission; "0" may represent keep receiving NW instructions (e.g., using C-RNTI or other RNTI to monitor Physical Downlink Control Channel (PDCCH)). In some implementations, "0" may represent stopping the transmission; "1" may represent keep receiving NW instructions (e.g., using C-RNTI or other RNTI to monitor PDCCH.) In some implementations, the NW may instruct the UE to switch back to the RRC_CONNECTED state by sending an RRC resume command. In some implementations, the NW may instruct the UE to switch back to the RRC_CONNECTED state by asking the UE to send an RRC resume request message. In some implementations, the NW may provide further UL grants via DCI (e.g., when the UE uses C-RNTI or other RNTI to monitor PDCCH).
▪ **R:** This field represents the reserved bit, which is set to "0";
▪ **TPC**: This field represents the TPC command for the PUCCH resource containing HARQ feedback for Msg-B, as specified, for example, in 3GPP TS 38.213 v15.7.0. The size of the TPC field is 2 bits;
▪ **Timing Advance Command:** This field indicates the index value TA used to control the amount of timing adjustment that the MAC entity has to apply, for example, in 3GPP TS 38.213 v15.7.0. The size of the Timing Advance Command field is 12 bits;
▪ **C-RNTI:** This field indicates the identity that is used by the MAC entity upon completion of the RA. The size of the C-RNTI field is 16 bits.

In some implementations, the RNTI, e.g., I-RNTI, RA-RNTI, TC-RNTI, or other new RNTI which is dedicatedly used for small data transmission, may be used to indicate whether the current procedure is for small data transmission. In some implementations, the NW may use the implicit way to inform the UE that the data is successfully received at the gNB side. For example, if the UE can successfully decode PDCCH by I-RNTI or the new RNTI that is dedicatedly used for small data transmission, the UE may consider that the gNB has successfully received the data.

In some implementations, the new RAR may be used to indicate to the UE to transmit previous data (e.g., retransmitted data) or new data (e.g., the other part of the full data that UE wants to send to the NW).

In some implementations, the existing RARs, e.g., fallbackRAR and/or successRAR, may be used for data re-transmission. In some implementations, the reserved bits of the existing RAR may be used for re-transmission indication. In some implementations, the reserved bits of the existing RAR may be used to indicate to the UE to transmit the other part of the full data that the UE wants to send to the NW.

In some implementations, the MAC CE of the transmitted data may carry index information for the transmitted data, which may be divided from a full data to be sent to the gNB. In some implementations, UE may use the MAC CE carried in the transmitted data to inform the gNB that the UE doesn't have another data for transmission.

In some implementations, when the UE receives the fallbackRAR, the UE may retransmit the same data (e.g., the same data of the previous small data transmission) or other new data (e.g., the new small data transmission).

In some implementations, the UE may carry the information to indicate that whether the UE needs other PUSCH resources to transmit data in the MAC CE of transmitted data. In some implementations, if the MAC CE in the transmitted data indicates that the UE needs other PUSCH resources, the gNB may send the fallbackRAR to the UE.

In some implementations, the MAC CE of the transmitted data may carry the information of the transmitted data, such as the size of the transmitted data, the index of the transmitted data, the total number of data that UE wants to send to the gNB, and so on.

In some implementations, if the UE informs the gNB that the UE has more than one data that needs to be transmitted in the on-going RACH-based small data transmission, the gNB may schedule the UL grant for the UE to send the data. In some implementations, the UL grant may be obtained from the PDCCH that is scrambled by the I-RNTI or other new RNTI used for small data transmission. In some implementations, the configured grant type1 may be scheduled to the UE via RRC messages sent by the gNB/cell if the UE informs the gNB that the UE has more than one data to be transmitted during the RACH-based small data transmission.

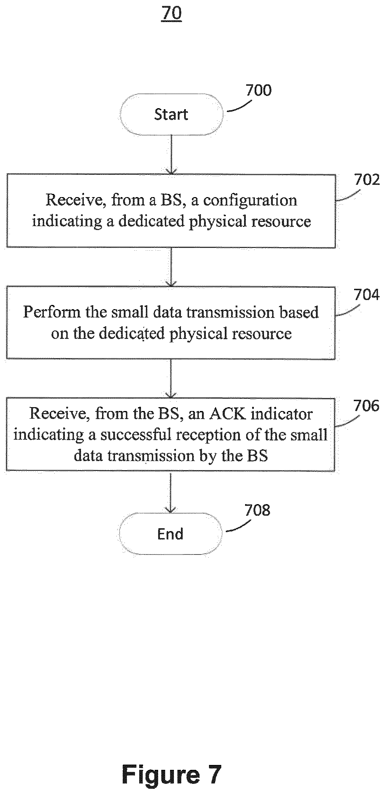

Figure 7 illustrates a small data transmission procedure 70 performed by the UE according to an example implementation of the present disclosure. As illustrated in Figure 7, the small data transmission procedure 70 for the UE includes the following actions:
▪ Action 700: Start.
▪ Action 702: Receive, from a BS, a configuration indicating a dedicated physical resource.
▪ Action 704: Perform the small data transmission based on the dedicated physical resource.
▪ Action 706: Receive, from the BS, an ACK indicator indicating a successful reception of the small data transmission by the BS.
▪ Action 708: End.

Preferably, action 702 to action 706 of the small data transmission procedure 70 may be applied to the UE. Specifically, in some implementations, the UE may receive the configuration indicating a dedicated physical resource from the BS in action 702. In one implementation, the dedicated physical resource may be obtained via the dedicated signaling or broadcast system information (SI). In one implementation, the dedicated physical resource may correspond to the RO, a preamble, or the PO. In one implementation, the dedicated physical resource may include the pre-configured PUSCH resource, the specific identifier, or the configured grant requested by the UE. In one implementation, the specific identifier may be the I-RNTI.

In the current invention, the small data transmission based on the dedicated physical resource in action 704, where the UE is in the inactive state to perform the small data transmission. In one implementation, the UE may be in the inactive state to perform the 2-step RACH procedure, the 4-step RACH procedure, or a configured grant (CG) type 1 transmission. In one implementation, the UE may be in the connected state before receiving the pre-configured PUSCH resource.

In the current invention, the UE receives the ACK indicator indicating the successful reception of the small data transmission by the BS in action 706. In the current invention, the ACK indicator is included in the RAR or may be decoded from a specific UE identifier on the PDCCH. In one implementation, the specific UE identifier may include one of the I-RNTI, the random access-RNTI (RA-RNTI) or a temporary cell-RNTI (TC-RNTI), and the RAR may include the fallbackRAR or the successRAR.

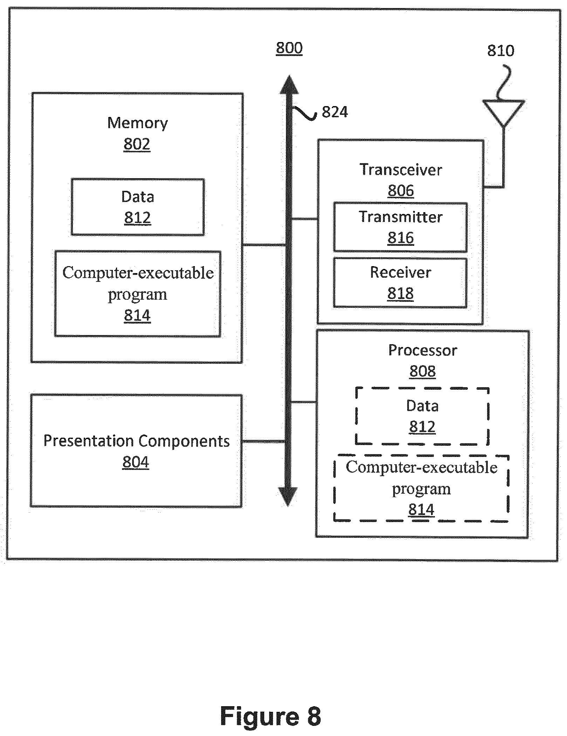

Please refer to Figure 8, which illustrates a block diagram of a node 800 for wireless communication according to an example implementation the present disclosure. As illustrated in Figure 8, the node 800 may include a transceiver 806, a processor 808, a memory 802, one or more presentation components 804, and at least one antenna 810. The node 800 may also include a Radio Frequency (RF) spectrum band module, a BS communications module, an NW communications module, and a system communications management module, input/output (I/O) ports, I/O components, and power supply (not explicitly illustrated in Figure 8). Each of these components may be in communication with each other, directly or indirectly, over one or more buses 824. In one implementation, the node 800 may be a UE or a BS that performs various functions disclosed herein, for example, with reference to Fig 7.

The transceiver 806 having a transmitter 816 (e.g., transmitting/transmission circuitry) and a receiver 818 (e.g., receiving/reception circuitry) may be configured to transmit and/or receive time and/or frequency resource partitioning information. In one implementation, the transceiver 806 may be configured to transmit in different types of subframes and slots, including, but not limited to, usable, non-usable and flexibly usable subframes and slot formats. The transceiver 806 may be configured to receive data and control channels.

The node 800 may include a variety of computer-readable media. Computer-readable media may be any available media that may be accessed by the node 800 and include both volatile (and non-volatile) media and removable (and non-removable) media. By way of example, and not limitation, computer-readable media may include computer storage media and communication media. Computer storage media may include both volatile (and non-volatile) and removable (and non-removable) media implemented according to any method or technology for storage of information such as computer-readable.

Computer storage media includes RAM, ROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer storage media does not include a propagated data signal. Communication media may typically embody computer-readable instructions, data structures, program modules, or other data in a modulated data signal such as a carrier wave or other transport mechanism and include any information delivery media. The term "modulated data signal" may mean a signal that has one or more of its characteristics set or changed in such a manner as to encode information in the signal. By way of example, and not limitation, communication media may include wired media such as a wired NW or direct-wired connection, and wireless media such as acoustic, RF, infrared and other wireless media. Combinations of any of the previous disclosure should also be included within the scope of computer-readable media.

The memory 802 may include computer-storage media in the form of volatile and/or non-volatile memory. The memory 802 may be removable, non-removable, or a combination thereof. For example, the memory 802 may include solid-state memory, hard drives, optical-disc drives, etc. As illustrated in Figure 8, the memory 802 may store computer-executable (or readable) program 814 (e.g., software codes) that are configured to, when executed, cause the processor 808 to perform various functions disclosed herein, for example, with reference to Fig 7. Alternatively, the computer-executable program 814 may not be directly executable by the processor 808 but may be configured to cause the node 800 (e.g., when compiled and executed) to perform various functions disclosed herein.

The processor 808 (e.g., having processing circuitry) may include an intelligent hardware device, a Central Processing Unit (CPU), a microcontroller, an ASIC, etc. The processor 808 may include memory. The processor 808 may process the data 812 and the computer-executable program 814 received from the memory 802, and information through the transceiver 806, the baseband communications module, and/or the NW communications module. The processor 808 may also process information to be sent to the transceiver 806 for transmission through the antenna 810, to the NW communications module for transmission to a CN.

One or more presentation components 804 may present data indications to a person or other device. Examples of presentation components 804 may include a display device, speaker, printing component, vibrating component, etc.

From the previous disclosure, it is manifested that various techniques may be used for implementing the concepts described in the present disclosure. Moreover, while the concepts have been disclosed with specific reference to certain implementations, a person of ordinary skill in the art would recognize that changes may be made in form and detail. As such, the disclosed implementations are to be considered in all respects as illustrative and not restrictive. It should also be understood that the present disclosure is not limited to the particular disclosed implementations. The scope of the invention is only limited by the claims.

## Claims

1. A method performed by a User Equipment, UE, for small data transmission, the method comprising:
receiving (702), from a base station, BS, a configuration indicating a dedicated physical resource;
performing (704) the small data transmission based on the dedicated physical resource while the UE is in an inactive state; and
receiving (706), from the BS, an acknowledgement, ACK, indicator indicating a successful reception of the small data transmission by the BS,
wherein:
the ACK indicator is included in a random access response, RAR.

2. The method of claim 1, wherein the dedicated physical resource is obtained via dedicated signaling or broadcast system information, SI.

3. The method of claim 1, wherein the dedicated physical resource corresponds to a random access channel, RACH, occasion, RO, a preamble, or a physical uplink shared channel, PUSCH, occasion, PO.

4. The method of claim 1, wherein the dedicated physical resource is a pre-configured PUSCH resource.

5. The method of claim 1, wherein further comprising receiving a threshold related to a data volume to determine whether to perform the small data transmission, wherein the threshold is configured by a Radio Resource Control, RRC, message.

6. The method of claim 1, wherein the ACK indicator is decoded from a specific UE identifier on a physical downlink control channel, PDCCH.

7. The method of claim 6, wherein:
the specific UE identifier is one of an inactive-radio network temporary identifier, I-RNTI, a random access-RNTI, RA-RNTI, a cell-RNTI, C-RNTI, or a temporary cell-RNTI, TC-RNTI, and
the RAR is a fallbackRAR or a successRAR.

8. The method of claim 1, wherein the small data transmission is performed via a two-step random access channel, RACH, procedure, a four-step RACH procedure, or a pre-configured physical uplink shared channel, PUSCH, resource provided by a configured grant, CG, type 1 configuration.

9. A User Equipment, UE, in a wireless communication system for small data transmission, which comprises a Base Station, BS, the UE comprising:
at least one processor (808); and
at least one memory (802) coupled to the at least one processor (808), wherein the at least one memory (802) stores a computer-executable program that, when executed by the at least one processor (808), causes the UE to performs the method of any of claims 1 to 8.

## Patentansprüche

1. Ein Verfahren, das von einer Benutzervorrichtung (user *equipment -* UE) zur Übertragung kleiner Datenmengen durchgeführt wird, wobei das Verfahren Folgendes umfasst:
Empfangen (702), ausgehend von einer Basisstation (*base station -* BS), einer Konfiguration, die eine dedizierte physikalische Ressource angibt;
Durchführen (704) der Übertragung kleiner Datenmengen auf der Grundlage der dedizierten physikalischen Ressource, während sich die UE in einem inaktiven Zustand befindet; und
Empfangen (706), von der BS, eines Bestätigungs (*acknowledgement -* ACK) -Anzeigers, der einen erfolgreichen Empfang der Übertragung kleiner Datenmengen durch die BS anzeigt, wobei:
der ACK-Anzeiger in einer *Random Access Response* (RAR) enthalten ist.

2. Das Verfahren nach Anspruch 1, wobei die dedizierte physikalische Ressource über dedizierte Signalisierung oder Rundfunk-Systeminformationen (*system information* - SI) erhalten wird.

3. Das Verfahren nach Anspruch 1, wobei die dedizierte physikalische Ressource einer Gelegenheit (*Occasion*) für einen *Random Access Channel* (RACH Occasion, RO), einem Vorab-Signal (*Preamble*) oder einer Gelegenheit für einen *Physical Uplink Shared Channel* (PUSCH Occasion, PO) entspricht.

4. Das Verfahren nach Anspruch 1, wobei die dedizierte physikalische Ressource eine vorkonfigurierte PUSCH-Ressource ist.

5. Das Verfahren nach Anspruch 1, wobei ferner umfassend:
Empfangen eines Schwellenwerts, der sich auf ein Datenvolumen bezieht, um zu bestimmen, ob die Übertragung kleiner Datenmengen durchgeführt werden soll, wobei der Schwellenwert durch eine Funkressourcensteuerungs (*Radio Resource Control -* RRC) -Nachricht konfiguriert ist.

6. Das Verfahren nach Anspruch 1, wobei der ACK-Indikator aus einer spezifischen UE-Kennung auf einem *Physical Downlink Control Channel* (PDCCH) decodiert wird.

7. Das Verfahren nach Anspruch 6, wobei:
die spezifische UE-Kennung eine der folgenden ist: eine temporäre Kennung für ein inaktives Funknetz, (*Inactive-Radio Network Temporary Identifier -* I-RNTI), eine Zufallszugriffs-RNTI (*Random Access RNTI* - RA-RNTI), eine Zellen-RNTI (*Cell RNTI -* C-RNTI) oder eine temporäre Zell-Kennung (*Temporary Cell RNTI* - TC-RNTI), und wobei
die RAR entweder eine Fallback-RAR oder eine Success-RAR ist.

8. Das Verfahren nach Anspruch 1, wobei die Übertragung kleiner Datenmengen über ein zweistufiges RACH (*random* access *channel*) *-* Verfahren, ein vierstufiges RACH-Verfahren oder eine vorkonfigurierte PUSCH (*physical uplink shared channel*) -Resource durchgeführt wird, die durch eine konfigurierte Zuteilung (*configured grant -* CG) vom Typ 1 bereitgestellt wird.

9. Ein Benutzergerät (UE) in einem drahtlosen Kommunikationssystem für die Übertragung kleiner Datenmengen, das eine Basisstation (BS) umfasst, wobei das UE Folgendes umfasst:
mindestens einen Prozessor (808); und
mindestens einen Speicher (802), der mit dem mindestens einen Prozessor (808) gekoppelt ist, wobei der mindestens eine Speicher (802) ein computerausführbares Programm speichert, das, wenn es von dem mindestens einen Prozessor (808) ausgeführt wird, bewirkt, dass das UE das Verfahren nach irgendeinem der Ansprüche von 1 bis 8 ausführt.

## Revendications

1. Un procédé mis en œuvre par un équipement utilisateur (user *equipment -* UE) pour la transmission de petites données, le procédé comprenant le fait de :
recevoir (702), de la part d'une station de base (*base station -* BS) une configuration indiquant une ressource physique dédiée ;
effectuer (704) la transmission de petites données sur la base de la ressource physique dédiée pendant que l'UE est dans un état inactif ; et de
recevoir (706), de la part de la BS, un indicateur d'accusé de réception (*acknowledgement* - ACK), indiquant une réception réussie de la transmission de petites données par la BS,
sachant que :
l'indicateur ACK est inclus dans une réponse d'accès aléatoire (*random* access *response* - RAR).

2. Le procédé d'après la revendication 1, sachant que la ressource physique dédiée est obtenue via une signalisation dédiée ou des informations système (*system information -* SI) de diffusion.

3. Le procédé d'après la revendication 1, sachant que la ressource physique dédiée correspond à une occasion RACH (*Random Access Channel,* RO), à une préambule ou à une occasion PUSCH (*Physical Uplink Shared Channel,* PO)

4. Le procédé d'après la revendication 1, sachant que la ressource physique dédiée est une ressource PUSCH préconfigurée.

5. Le procédé d'après la revendication 1, sachant que comprenant en outre la réception d'un seuil lié à un volume de données pour déterminer s'il faut effectuer la transmission de petites données, sachant que le seuil est configuré par un message de commande des ressources radio (*radio resource control -* RRC).

6. Le procédé d'après la revendication 1, sachant que l'indicateur ACK est décodé à partir d'un identifiant UE spécifique sur un canal de commande en liaison descendante physique (*physical downlink control channel -* PDCCH).

7. Le procédé d'après la revendication 6, sachant que : l'identifiant UE spécifique est l'un parmi un identifiant temporaire de réseau radio inactif (*Inactive-Radio Network Temporary Identifier -* I-RNTI), un identifiant d'accès aléatoire (*Random Access RNTI* - RA-RNTI), un identifiant de cellul (*Cell RNTI* - C-RNTI), ou un identifiant de cellule temporaire (*Temporary Cell RNTI -* TC-RNTI), et que
le RAR est un *fallbackRAR* ou un *successRAR.*

8. Le procédé d'après la revendication 1, sachant que la transmission de petites données est effectuée via une procédure de canal d'accès aléatoire en deux étapes, RACH, une procédure RACH en quatre étapes, ou une ressource de canal partagé physique en liaison montante préconfigurée, PUSCH, fournie par une attribution configurée (*configured grant -* CG) de type 1.

9. Un équipement utilisateur (*user equipment -* UE) dans un système de communication sans fil pour la transmission de petites données, qui comprend une station de base *(base station* - BS), l'UE comprenant :
au moins un processeur (808) ; et
au moins une mémoire (802) couplée au ou aux processeurs (808), sachant que la ou les mémoires (802) stockent un programme exécutable par ordinateur qui, lorsqu'il est exécuté par le ou les processeurs (808), amène l'UE à exécuter le procédé d'après l'une quelconque des revendications de 1 à 8.
